# EUROPÄISCHE PATENTANMELDUNG

(11) **EP 0 887 116 A2**
(43) Veröffentlichungstag der Anmeldung: **30.12.1998**
(21) Anmeldenummer: 98111413.5
(22) Anmeldetag: 22.06.1998
(51) Int. Cl.: B05C 17/00, B29C 47/10

(54) **Schweissextruder**

(30) Priorität: 25.06.1997 DE 19727016; 28.03.1998 DE 19813935
(71) Anmelder: Dohle, Peter Christian, 53809 Ruppichteroth (DE)
(72) Erfinder: Dohle, Peter Christian, 53809 Ruppichteroth (DE)
(74) Vertreter: Fechner, Joachim, Dr.-Ing.

(57) **Zusammenfassung**

Schweißextruder zur Bildung eines plastifizierten Kunststoffstranges aus einem Schweißdraht aus thermoplastischem Kunststoff, mit einem Zylinder (1), einer in dem Zylinder fliegend gelagerten Schnecke (2) mit einem Einzugsbereich (I) mit in den Schweißdraht einschneidenden Schneckengängen, einem Kompressions- und Plastifizierbereich (III) und einer Einrichtung zur Zerkleinerung des eingezogenen Schweißdrahtes, wobei der Zylinder (1) im Einzugsbereich (I) einen Zuführungskanal (8) für den Schweißdraht aufweist, dadurch gekennzeichnet, daß die Zerkleinerungseinrichtung durch einen zwischen dem Einzugsbereich (I) und dem Kompressionsbereich (III) angeordneten Zwischenbereich (II) mit größerer Schneckengangsteigung als im Einzugsbereich gebildet ist und an der Innenseite des Zylinders (1) oder seiner Buchse (7) eine von dem Zuführungskanal (8) durch den Einzugsbereich (I) in den Zwischenbereich (II) reichende Führungsrille (10) für den Schweißdraht ausgebildet ist.

## Beschreibung

Die Erfindung betrifft einen Schweißextruder zur Bildung eines plastifizierten Kunststoffstranges aus einem Schweißdraht aus thermoplastischem Kunststoff, mit einem Zylinder, einer in dem Zylinder fliegend gelagerten Schnecke mit einem Einzugsbereich mit in den Schweißdraht einschneidenden Schneckengängen, einem Kompressions- und Plastifizierbereich und einer Einrichtung zur Zerkleinerung des eingezogenen Schweißdrahtes, wobei der Zylinder im Einzugsbereich einen Zuführungskanal für den Schweißdraht aufweist.

Aus DE 32 21 492 C1 ist ein Schweißextruder bekannt, bei dem der Schweißdraht durch den Anfang des Plastifizierteils der Schnecke zerkleinert wird. Diese Zerkleinerung ist nicht optimal, weil die Plastifizierschnecke Teile von dem Schweißdraht schräg zu dessen Achse abschert, für die Zuführung des Schweißdrahtes zur Abscherstelle eine Durchmesserverringerung der Schnecke (und des Zylinders) beim Übergang vom Einzugsbereich zum Plastifizierbereich erforderlich ist und der Schweißdraht am Anfang des Plastifizierbereiches schon erhöhter Temperatur ausgesetzt ist, wodurch es an der Scherungsstelle leicht zur Haftung des Schweißdrahtes an der Zylinderwand und Stauung des Schweißdrahtvorschubs kommen kann.

Aus DE 38 35 250 C1 ist ebenfalls ein Schweißextruder bekannt, dessen Extrudierschnecke einen Einzugsbereich und einen Kompressions-/Plastifizierbereich aufweist. Die Granulierung des Schweißdrahtes erfolgt hier bereits im Einzugsbereich, in dem der Schweißdraht immer dichter an die mit Sägezahnprofil ausgebildete Einzugsschnecke herangeführt wird, so daß er am Ende des Einzugsbereichs in einzelne Teilchen aufgetrennt ist. Hierbei ist nachteilig, daß nur Schweißdrähte granuliert werden können, deren Durchmesser kleiner als die Gangtiefe der Einzugsschnecke ist. Außerdem ist für die vollständige Abtrennung der Teilchen von dem Draht eine präzise Dimensionierung von Schneckendurchmesser und Zylinderinnendurchmesser nötig, da noch zusammenhängende Teilchen einen Materialstau verursachen können. Auch dieser Schweißextruder hat im Einzugs- und Plastifizierbereich unterschiedliche Durchmesser.

Der Erfindung liegt die Aufgabe zugrunde, einen Schweißextruder zu schaffen, bei dem die Zerkleinerung bzw. Granulierung des eingezogenen Schweißdrahtes ohne Gefahr der Staubildung oder Störung der Materialzufuhr zur Plastifizierzone möglich ist. Insbesondere soll der Schweißdraht unter Bildung von Teilchen etwa gleicher Größe zerkleinert werden, so daß eine problemlose Komprimierung und Plastifizierung zu einer homogenen Schmelze möglich ist. Schließlich soll auch die Extruderkonstuktion vereinfacht werden. Weitere Vorteile ergeben sich aus der folgenden Beschreibung.

Diese Aufgabe wird bei dem eingangs genannten Schweißextruder erfindungsgemäß dadurch gelöst, daß die Zerkleinerungeinrichtung durch einen zwischen dem Einzugsbereich und dem Kompressionsbereich der Schnecke angeordneten Zwischenbereich mit größerer Schneckengangsteigung als im Einzugsbereich gebildet ist und an der Innenseite des Zylinders oder seiner Buchse eine von dem Zuführungskanal durch den Einzugsbereich in den Zwischenbereich reichende Führungsrille für den Schweißdraht ausgebildet ist. Der durch den Zuführungskanal zugeführte und von den im Profil spitzen Schneckengängen des Einzugsbereiches erfaßte Schweißdraht wird in der Führungsrille zum Zwischenbereich gefördert. Dabei dringen die Schneckengänge in den Draht ein und erzeugen in ihm Kerben, die am Übergang vom Einzugs- zum Zwischenbereich von dem Schneckengang des Zwischenbereichs übernommen werden. Da die Gangsteigung bzw. der Steigungswinkel der Schnecke im Zwischenbereich größer als im Einzugsbereich ist, wird nach dem Einfahren des Schneckenanfangs des Zwischenbereichs in die von der Einzugsschnecke gebildete Kerbe auf die vordere Kerbenflanke ein wachsender Druck ausgeübt, der bewirkt, daß das vor der Kerbe befindliche Drahtstück von dem durch den Einzugsteil der Schnecke gehaltenen Schweißdraht abreißt. Die Schnecke des Einzugsbereichs kann ohne Unterbrechung mit stetiger oder sprunghafter Änderung des Steigungswinkels in die Schnecke des Zwischenbereichs übergehen. Die Schnecke kann am Übergang beider Bereiche aber auch unterbrochen sein. Zum sicheren Einfahren der Schnecke des Zwischenbereichs in die im Einzugsbereich gebildete Kerbe kann die Ganghöhe der Schnecke im Zwischenbereich am Anfang von null auf ihren Endwert ansteigend ausgebildet sein.

Der Schneckengang des Zwischenbereiches kann auch an einer Stelle außerhalb der von dem Einzugsteil der Schnecke gebildeten Kerbe in den Schweißdraht einschneiden und so einen eigenen Kerbeinschnitt bilden, an dem bei Weiterdrehung der Schnecke die Abtrennung des vorderen Drahtstückes erfolgt. Dies ist dann der Fall, wenn der Einzugsteil der Schnecke eingängig und der Zwischenteil der Schnecke zwei- oder mehrgängig ist. Wesentlich ist, daß das vorderste Schweißdrahtstück bei der Übergabe von dem Einzugsteil der Schnecke an das Zwischenteil der Schnecke eine Steigerung der Fördergeschwindigkeit erfährt, wodurch dieses Schweißdrahtstück an der Kerbe, die von der Zwischenschnecke übernommen oder neu gebildet wurde, von dem übrigen Schweißdraht getrennt wird. Das so abgetrennte Schweißdrahtteilchen gelangt dann aus der Führungsrille zwischen die Schneckengänge des Zwischenbereiches und wird schnell zum Kompressions- und Plastifizierbereich gefördert.

Während bisher von einem Zuführungskanal für den Schweißdraht die Rede war, kann der Schweißextruder für höhere Leistungen auch zwei oder mehr solche Zuführungskanäle aufweisen, so daß bei eingängiger Schnecke pro Schneckendrehung zwei oder mehr Teilchen erzeugt werden. In diesem Falle genügt im Zwischenbereich eine eingängige Schnecke, die bei einer Umdrehung nacheinander die zwei oder mehr Teilchen abtrennt.

Nach der bevorzugten Ausführungsform des erfindungsgemäßen Schweißextruders liegt das Verhältnis der Gangsteigung der Schnecke im Zwischenbereich zu der Gangsteigung der Schnecke im Einzugsbereich in dem Bereich von 1,5 bis 10, insbesondere in dem Bereich von 2 bis 7. Ein praktischer Wert liegt z.B. bei 4. Diese Steigungsverhältnisse gewährleisten die sichere Zerkleinerung des Schweißdrahtes, wobei das Verhältnis umso kleiner sein kann, je spröder das Drahmaterial ist.

Vorzugsweise beträgt die zwischen dem Boden der Führungsrille und dem Grat der Schnecke im Einzugsbereich gemessene Rillentiefe 25 bis 70% der Schweißdrahtdicke. Insbesondere liegt dieser Bereich bei 25 bis 50%. Der Eingriff der spitzen Schneckengänge des Einzugsteils der Schnecke bewirken die Förderung des Schweißdrahtes in der Führungsrille. Außerdem werden im Schweißdraht Kerben gebildet, die nach der Übergabe an die Schnecke des Zwischenbereiches vorzugsweise als Sollbruchstellen der Zerkleinerung dienen.

Vorzugsweise haben in den drei Bereichen der Zylinder den gleichen Innendurchmesser und die Schnecke den gleichen Durchmesser. Hierdurch wird die Fertigung des Extruders im Vergleich zu bekannten Konstruktionen vereinfacht, die im Einzugsbereich einen größeren Durchmesser als im Plastifizierbereich haben.

Zweckmäßigerweise hat die Schnecke im Zwischenbereich die größte Gangtiefe, da die Gänge hier die neugebildeten, noch unkomprimierten Granulatkörner aufnehmen müssen. Im Kompressions- und Plastifizierbereich nimmt die Gangtiefe in bekannter Weise zur Spitze des Schneckenkörpers hin ab.

Vorzugsweise ist die Schnecke im Zwischenbereich als zweigängige Schnecke ausgebildet, von dem die eine Schnecke auf den Zwischenbereich begrenzt ist und die andere Schnecke in die Schnecke des Kompressionsbereiches übergeht. Mit einem oder mehr Schneckengängen im Zwischenbereich ist es möglich, von einem Schweißdraht bei einer Umdrehung ein bzw. mehrere Teilchen abzutrennen.

Vorzugsweise ist der Zylinder in dem Zwischenbereich mit einem Kühlmantel versehen. Der Kühlmantel kann z.B. mit kalter Luft durchströmt werden. Auf diese Weise wird die Erwärmung des Zwischenbereiches des Zylinders, insbesondere im Bereich der Führungsrille(n), von dem beheizten Plastifizierbereich des Zylinders her weitgehend vermieden. Dadurch kann auch der zur Zerkleinerung anstehende Schweißdraht relativ kalt gehalten werden, so daß das Drahtmaterial relativ spröde ist und an den vorgebildeten Kerben leicht reißt. Der Kühlmantel kann von Luft durchströmt werden und wird dann zweckmäßigerweise an die Druckseite eines Luftverdichters angeschlossen. Die geförderte Luft umströmt den Zwischenbereich zwecks Kühlung und wird dann einem Lufterhitzer zugeführt. Die erhitzte Luft wird durch ein Rohr auf die zu verschweißenden Ränder der Werkstoffe geleitet.

Nach der bevorzugten Ausführungsform des erfindungsgemäßen Schweißextruders ist die Schnecke im Einzugsbereich konisch ausgebildet und die Führungsrille zur Schneckenachse entsprechend geneigt. Infolge der Konizität des Einzugsschneckenteils wirkt die durch die Einkerbungen des Drahtes entstehende Kraft nach dem Parallelogramm der Kräfte nur zum Teil senkrecht zur Schneckenachse und zum Teil in der Achsrichtung. Durch diese Verminderung der Querkraft wird eine exzentrische Verlagerung der Schnecke und ihr Schleifen im Zylinder bzw. in der Buchse vermieden, das zu einem Metallabrieb und einer Verfärbung der plastifizierten Masse führen kann. Zweckmäßigerweise ist auch der Zylinder bzw. die Buchse im Einzugsbereich konisch ausgebildet.

In weiterer Ausgestaltung ist der Schweißextruder zur Bildung eines plastifizierten Kunststoffstranges der eingangs genannten Art mit einem Zylindergehäuse, das eine Extruderschnecke enthält und im Bereich des Plastifizierteils der Schnecke mit einem Heizmantel versehen ist, einem in dem Innenraum des Zylindergehäuses abströmseitig der Extruderschnecke angeordneten Temperaturfühler, der mit einem Regler für die Leistung des Heizmantels zusammengeschaltet ist, und einem Lufterhitzer, der mit einer neben der Extruderdüse engeordneten Heißluftdüse strömungsmäßig verbunden ist, erfindungsgemäß dadurch gekennzeichnet, daß der Temperaturfühler mit dem Regler und dem Lufterhitzer zu einem Regelkreis zusammengeschaltet ist und der Heizmantel wenigstens einen mehrere oder stetige Richtungsänderungen aufweisenden Heißluftkanal enthält, dessen Eingang an den Lufterhitzer angeschlossen ist und dessen Ausgang an die Heißluftdüse führt. Durch die Ausstattung des Extruders mit nur einem elektrischen Erhitzer für die Luft kann das Gerät kostengünstiger hergestellt werden; zudem ist der Energieverbrauch für die Heizung geringer. Das Gerät baut im vorderen Bereich durch die in den Heizmantel integrierte Heißluftleitung schmaler und ist daher in enger Umgebung besser zu handhaben. Durch die Ausbildung des Heizmantels wird der Wärmeübergang auf den Zylinder so verbessert, daß die Zeitkonstante der Regelung so verringert wird, daß bei schnelllaufenden Schweißextrudern eine ausreichend schnelle Temperaturregelung erreicht wird.

Bei der bevorzugten Ausführungsform des Schweißextruders befindet sich der Eingang des Heißluftkanals am hinteren Ende des Heizmantels und ist der Ausgang des Heißluftkanals als Schlitzdüse ausgebildet oder mit einer solchen verbunden. Es entfällt eine separate, neben dem Extruderzylinder verlaufende Heißluftleitung zur Heißluftdüse. Durch die Schlitzdüse kann der Heißluftstrom zur Vorwärmung gezielter auf die Schweißstelle gerichtet werden. Der Schlitz der Düse umgibt die Kunststoffdüse im allgemeinen nur teilweise. Die Schlitzdüse kann auch drehbar sein, so daß der Heißluftstrom in Bezug auf den Kunststoffstrang in Umfangsrichtung verstellt werden kann.

Vorzugsweise verläuft der Heißluftkanal in dem Heizmantel parallel zur Zylinderachse und ist er verzweigt und mit 180°-Umlenkungen versehen. Durch diese Heißluftführung kann ein ausreichender Wärmeübergang auf den Extruderzylinder erreicht werden, ohne daß die für die Vorwärmung der Schweißnaht nötige Lufttemperatur unterschritten wird. Die Heißluftkanäle können auf der Außenseite des Zylinders ausgebildet und durch einen dem Zylinder eng anliegenden Rohrkörper abgedeckt sein.

Nach der bevorzugten Ausführungsform der Erfindung ist in der Schaltung des Schneckenantriebs ein Schutzschalter angeordnet, der den Antrieb freischaltet, wenn die Ist-Temperatur in der plastifizierten Kunststoffmasse einen vorgegebenen Wert überschreitet. So wird vermieden, daß der Schneckenantrieb bei eingefrorener Kunststoffmasse eingeschaltet wird und infolge Überlastung beschädigt wird.

Zweckmäßigerweise liefert der Regler des Regelkreises eine stetige Ausgangsgröße, die den Heizstrom des Lufterhitzers taktweise schaltet. Die stetige Ausgangsgröße kann ein Strom beispielsweise in dem Bereich von 0 bis 20 mA sein, der einen elektronischen Schalter des Heizstroms für den Lufterhitzer taktet. Mit der erfindungsgemäßen Regelung kann die Temperatur der Kunststoffschmelze in dem Extruder mit einer Genauigkeit von ± 1 bis 1,5 °C geregelt werden.

Das Zylindergehäuse des erfindungsgemäßen Schweißextruders besteht zweckmäßigerweise aus einer Leichtmetalllegierung. Diese Legierung trägt durch ihre Wärmeleitfähigkeit zu dem guten Wärmedurchgang durch die Zylinderwand zur Kunststoffschmelze bei. Außerdem wird eine Gewichtsreduktion des Geräts im Vergleich zu Stahl um z.B. etwa 1,7 Kg ermöglicht.

Das Verfahren zur Regelung der Temperatur einer Kunststoffmasse, die in dem Schweißextruder der zuvor genannten Art durch die einer Heizung des Zylindergehäuses zugeführte Wärme plastifiziert wird, wobei die Ist-Temperatur in der plastifizierten Kunststoffmasse gemessen wird und zur Regelung der Heizleistung dient und die Ränder der zu verschweißenden Werkstücke durch Heißluft vorgewärmt werden, ist erfindungsgemäß dadurch gekennzeichnet, daß man die gemessene Temperatur zur Regelung der Heißlufttemperatur benutzt und die Heißluft zur Beheizung des Zylindergehäuses und danach zur Vorwärmung der Werkstückränder dient. Anders als bei dem bekannten Schweißextruder kommt der erfindungsgemäße Extruder mit einem Heizkörper aus, der dazu dient, einen Luftstrom durch elektrische Energie zu erhitzen. Dabei wird die Heizleistung des Lufterhitzers auf eine möglichst konstante Temperatur der plastifizierten Kunststoffmasse geregelt. Der Heißluftstrom dient nacheinander zur Beheizung des Extruderzylinders im Bereich des Plastifizierteils der Extruderschnecke zwecks Plastifizierung der Kunststoffmasse und dann zur Vorwärmung der zu verschweißenden Ränder der Werkstücke. Es wurde gefunden, daß beide Heizaufgaben durch den gleichen Heißluftstrom gelöst werden können. Zudem wird durch die Beheizung des Extruderzylinders mit der Heißluft eine im Vergleich zu der bekannten Bauweise mit separater Heißluftleitung schmalere Bauart erreicht, wodurch die Handhabbarkeit verbessert wird. Alle diese Vorteile werden erreicht, ohne daß die Temperaturregelung der plastifizierten Kunststoffmasse beeinträchtigt wird. Dies ist umso überraschender, als durch die im Vergleich zur bekannten Heizbandbeheizung vorgenommene Zwischenschaltung eines Gases zwischen Heizkörper und Zylinderwand die Zeitkonstante der Regelstrecke zunimmt. Es ist zu bemerken, daß diese Erhöhung der Zeitkonstante keine Verringerung der bei Schweißextrudern beträchtlichen Durchsatzgeschwindigkeit der Kunststoffmasse erfordert.

Bei einer bevorzugten Ausführungsform des erfindungsgemäßen Verfahrens regelt man die Heißlufttemperatur auf eine um 10 bis 50°C über der gemessenen Ist-Temperatur liegende Temperatur. Bei dieser Regelung erfolgt ein ausreichender Wärmeübergang auf den Extruderzylinder und damit die Kunststoffmasse, andererseits steht die Heißluft nach dem Passieren des Heizmantels noch mit einer für die Vorwärmung der Schweißnahtränder ausreichenden Temperatur zur Verfügung. Es versteht sich, daß die absolute Höhe der Lufttemperatur verschieden sein kann und von der Art des zu plastifizierenden Kunststoffs abhängt.

Vorzugsweise leitet man die Heißluft im wesentlichen parallel zur Gehäuseachse hin und her durch einen den Zylinder umgebenden Mantel. Durch diese Luftführung wird ein guter und gleichmäßiger Wärmeübergang von der Heißluft auf den die Kunststoffschmelze umgebenden Zylinder erreicht.

Vorzugsweise wird die gemessene Ist-Temperatur auch dazu benutzt, einen Sperrschalter für den Schneckenantrieb des Extruders zu betätigen. Dabei erfolgt die Freischaltung erst bei einer Temperatur der Kunststoffmasse, die oberhalb ihrer Erweichungstemperatur liegt. So wird vermieden, daß bei noch fester Kunststoffmasse in dem Zylinder der Schneckenantrieb eingeschaltet wird und Schaden nimmt.

Mehrere Ausführungsformen des erfindungsgemäßen Schweißextruders werden nun an Hand der Zeichnung näher beschrieben. Es zeigen
Figur 1 die Seitenansicht eines Schweißextruders, teilweise im Schnitt, der mit einer Bohrmaschine als Antrieb gekoppelt ist;
Figur 2 die Draufsicht des in Figur 1 gezeigten Aggregats;
Figur 3 einen Teilschnitt des Schweißextruders von Figur 1 in vergrößertem Maßstab;
Figur 4 einen Teilschnitt entsprechend Figur 3 einer anderen Ausführungsform des Schweißextruders;
Figur 5 eine Seitenansicht einer weiteren Ausführungsform des Schweißextruders auf einer Handbohrmaschine als Antrieb, teilweise im Schnitt;

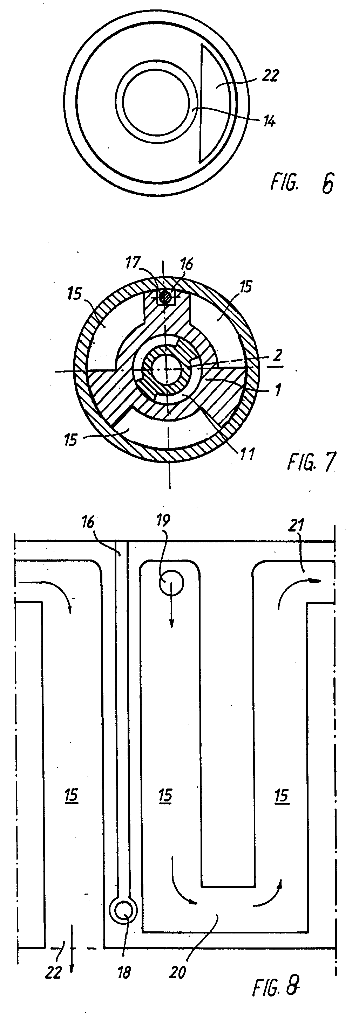

Figur 6 eine Frontansicht des Extruders der Figur 5 in vergrößertem Maßstab;
Figur 7 einen Schnitt nach der Linie III-III der Figur 5; und
Figur 8 die Abwicklung des Kanalsystems des Heizmantels bei der Ausführungsform der Figur 5.

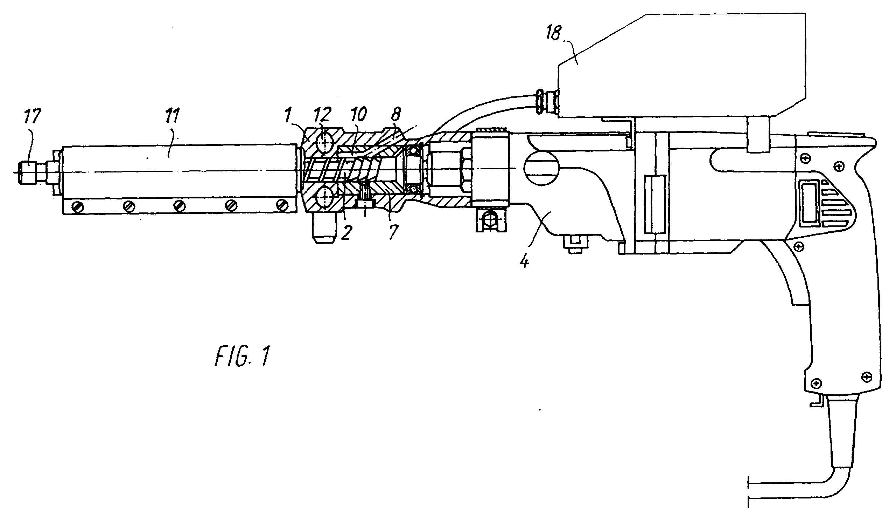

Nach den Figuren 1 bis 3 umfaßt der Schweißextruder ein Zylindergehäuse 1 und eine im hinteren Bereich des Gehäuses 1 durch ein Axiallager 3 fliegend gelagerte Extruderschnecke 2. Das hintere Ende der Extruderschnecke 2 ist über einen Adapter mit einer Antriebsmaschine 4 gekuppelt. Die Extruderschnecke 2 hat einen hinteren Einzugsbereich (I), einen sich nach vorne daran anschließenden Zwischenbereich (II) und einen sich nach vorne daran anschließenden Kompressions- und Plastifizierbereich (III). Der Schneckenteil 5 des Einzugsbereiches (I) hat ein sägezahnförmiges Profil mit kleiner Gangsteigung und ist im dargestellten Ausführungsbeispiel eingängig. Die Schnecke 6 in dem Zwischenbereich (II) hat dagegen außenseitig flache Gänge und eine erheblich größere Gangsteigung als der Schneckenteil 5. Bei dem dargestellten Beispiel beträgt das Verhältnis der Gangsteigungen der Schneckenteile 6 und 5 etwa 4:1. Die Schnecke 6 im Zwischenbereich (II) hat zwei separate Schneckengänge, von denen der eine am vorderen Ende des Zwischenbereiches (II) endet, während die andere kontinuierlich mit verringerter Gangsteigung in den Kompressions- und den Plastifizierbereich der Extruderschnecke 2 weitergeht.

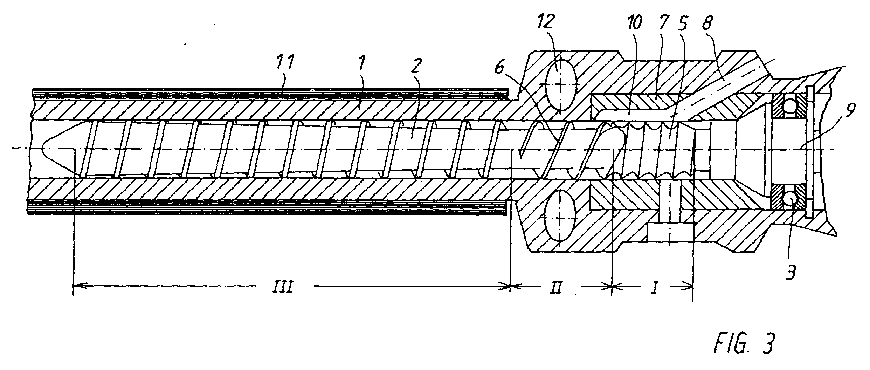

Der Zylinder 1 enthält aus fertigungstechnischen Gründen im hinteren Bereich eine Buchse 7, deren lichte Weite gleich der des Extruderzylinders 1 ist. Der Extruderzylinder 1 und die Buchse 7 enthalten einen Zuführungskanal 8 unter einem spitzen Winkel zur Achse 9 des Schweißextruders für die Zuführung eines Schweißdrahtes zum Einzugsbereich (I) der Schnecke. Wie insbesondere aus Figur 3 ersichtlich ist, schließt sich an den Zuführungskanal 8 in der Buchse 7 eine zur Achse 9 parallele Führungsrille 10 an, die sich über den Einzugsbereich (I) hinaus bis in den Zwischenbereich (II) erstreckt. Die Führungsrille 10 dient zur achsparallelen Führung des durch den Zuführungskanal 8 zugeführten Schweißdrahtes, wenn dieser durch die Spitzgänge des Schneckenteils 5 erfaßt und gefördert wird. Gelangt der Schweißdraht in der Führungsrille 10 mit seinem vorderen Ende in den Zwischenbereich (II), wird er in der von dem Schneckenteil 5 gebildeten Kerbe durch den Schneckenteil 6 übernommen und erfaßt und infolge der größeren Gangsteigung dieses Schneckenteils an der Kerbe getrennt. Das so gebildete Drahtteilchen wird dann durch den Schneckenteil 6 schnell durch den Zwischenbereich (II) hindurch in den Kompressions- und Plastifizierbereich (III) gefördert, wo in bekannter Weise die Verdichtung und Plastifizierung des körnigen Materials erfolgt.

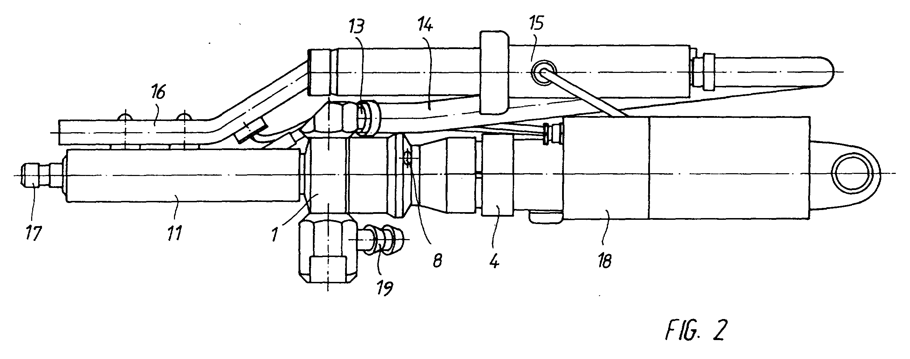

Der Extruderzylinder 1 ist im Kompressions- und Plastifizierbereich (III) durch ein äußeres Heizband 11 beheizt. Um eine Erwärmung des Zylinders im Zwischenbereich (II) und im Einzugsbereich (I) und damit auch eine Erwärmung des Schweißdrahtes zu verhindern, enthält der Zylinder im Zwischenbereich (II) einen Mantel 12, der von Kühlluft durchströmt wird. Zur Erzeugung eines Kühlluftstroms durch den Kühlmantel 12 ist nach Figur 2 der eine Stutzen 19 mit der Druckseite eines Luftgebläses (nicht dargestellt) verbunden, durch das ein Luftstrom erzeugt wird. Der abströmseitige Stutzen 13 des Kühlmantels ist über die Leitung 14 mit einem Lufterhitzer 15 verbunden. An die Abströmseite des Lufterhitzers 15 ist ein Rohr angeschlossen, durch das die erzeugte Heißluft auf die Ränder der zu verschweißenden Werkstücke neben der Düse 17 des Schweißextruders geleitet wird. Die Bezugszahl 18 bezeichnet einen Kasten, in dem u.a. die Temperaturregelung des plastifizierten Kunststoffs untergebracht ist.

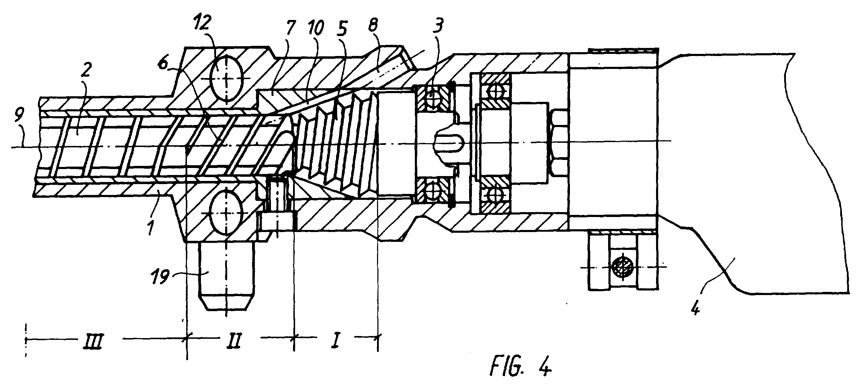

Die in Figur 4 gezeigte Ausführungsform des Extruders unterscheidet sich von der Ausführungsform nach Figur 3 im wesentlichen dadurch, daß der Schneckenteil 5 im Einzugsbereich I konisch ausgebildet ist und die Führungsrille 10 zur Achse 9 geneigt ist, wobei der Neigungswinkel gleich dem halben Öffnungswinkel des Kegels des Schneckenteils 5 ist. Der Vorteil gegenüber der Ausführungsform nach Figur 3 mit zylindrisch angeordneten Schneckengängen im Bereich I und achsparallelem Verlauf der Führungsrille 10 liegt darin, daß die auf die Schnecke 2 wirkende Querkraft infolge des Eindrückens der Schneckengänge im Einzugsbereich in den Schweißdraht reduziert ist, weil nach dem Parallelogramm der Kräfte eine Kraftkomponente axial auf das Schneckenlager 3 abgeleitet wird.

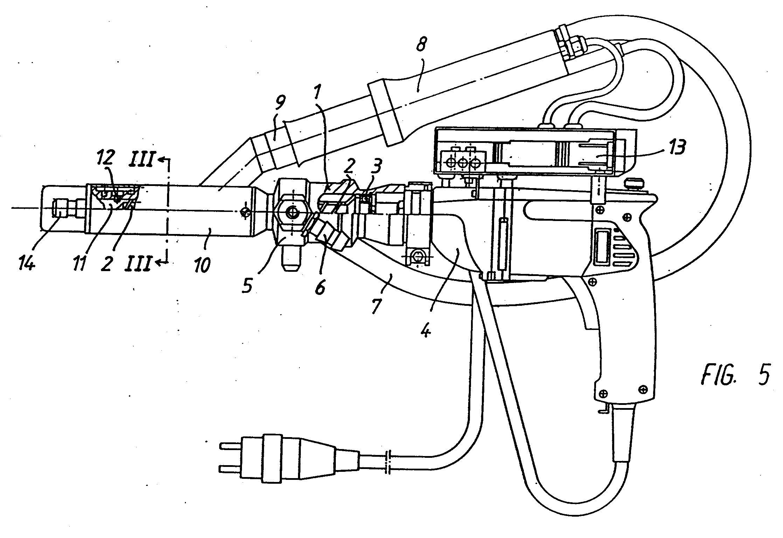

Nach Figur 5 umfaßt der Schweißextruder ein Zylindergehäuse 1 und eine im hinteren Bereich des Zylinders 1 durch ein Axiallager 3 fliegend gelagerte Extruderschnecke 2. Das hintere Ende der Extruderschnecke 2 ist über einen Adapter mit einer Antriebsmaschine 4 gekuppelt. Der Zylinder 1 hat einen kurzen Kühlbereich 5 mit einem inneren Kühlkanal, dem durch den Stutzen 6 Luft zugeführt wird, während von einem zweiten Stutzen (nicht sichtbar) durch die Leitung 7 die Luft abgeführt und einem Lufterhitzer 8 zugeführt wird. Der Lufterhitzer 8 enthält einen geregelten Heizkörper (nicht dargestellt), dessen Regelung ein wesentlicher Teil der Erfindung ist. Die in dem Lufterhitzer 8 erhitzte Luft wird durch eine feste Leitung 9 dem hinteren Ende eines Heizmantels 10 zugeführt, der das vordere Ende des Extruderzylinders 1 umgibt.

In dem Innenraum 11 des Zylinders 1 vor der Schnecke 2 ist ein Temperaturfühler 12 in Form eines Thermoelements angeordnet, das die Temperatur der plastifizierten Kunststoffmasse in dem Innenraum 11 mißt. Der Temperaturfühler 12 ist mit einem Regler 13 und einem Heizkörper (in dem Lufterhitzer 8) zu einem Regelkreis zusammengeschaltet, durch den die Temperatur der plastifizierten Kunststoffmasse in dem Innenraum 11 und damit auch des durch die Düse 14 extrudierten Kunststoffstranges in engen Grenzen konstant gehalten wird.

Zur Bildung des Heizmantels 10 ist in dem Zylinder 1 ein außenseitig in Längsrichtung des Zylinders verlaufender Kanal 15 eingefräst, wie aus Figur 3 ersichtlich ist. Außerdem enthält der Zylinder eine axparallele Nut 16 zur Aufnahme der zum Temperaturfühler 12 führenden Leitung 17. Aus der Abwicklung der Zylinderaußenseite in Figur 4 ist der Verlauf des Kanals 15 ersichtlich. Die Leitung 9 mündet bei 19 in den Kanal. Der Kanal 15 hat hat bei 20 und 21 zwei Umlenkungen um 180° und endet an dem Austritt 22, der die Form einer Schlitzdüse wie in Figur 2 gezeigt haben kann. Mit 18 ist die Bohrung für den Durchtritt des Temperaturfühlers 12 durch die Zylinderwand bezeichnet.

Durch die erfindungsgemäße Ausbildung des Heizmantels wird der Wärmeübergang von dem Heizgas auf den Zylinder erheblich gesteigert und dadurch die Zeitkonstante des Regelkreises so weit verringert, daß die Temperaturregelung der Kunststoffmasse bei schnelllaufenden Schweißextrudern möglich ist.

## Patentansprüche

1. Schweißextruder zur Bildung eines plastifizierten Kunststoffstranges aus einem Schweißdraht aus thermoplastischem Kunststoff, mit einem Zylinder (1), einer in dem Zylinder fliegend gelagerten Schnecke (2) mit einem Einzugsbereich (I) mit in den Schweißdraht einschneidenden Schneckengängen, einem Kompressions- und Plastifizierbereich (III) und einer Einrichtung zur Zerkleinerung des eingezogenen Schweißdrahtes, wobei der Zylinder (1) im Einzugsbereich (I) einen Zuführungskanal (8) für den Schweißdraht aufweist, dadurch gekennzeichnet, daß die Zerkleinerungseinrichtung durch einen zwischen dem Einzugsbereich (I) und dem Kompressionsbereich (III) angeordneten Zwischenbereich (II) mit größerer Schneckengangsteigung als im Einzugsbereich gebildet ist und an der Innenseite des Zylinders (1) oder seiner Buchse (7) eine von dem Zuführungskanal (8) durch den Einzugsbereich (I) in den Zwischenbereich (II) reichende Führungsrille (10) für den Schweißdraht ausgebildet ist.

2. Schweißextruder nach Anspruch 1, dadurch gekennzeichnet, daß das Verhältnis der Gangsteigung der Schnecke (6) im Zwischenbereich (II) zu der Gangsteigung der Schnecke (5) im Einzugsbereich (I) in dem Bereich von 1,5 bis 10, vorzugsweise in dem Bereich von 2 bis 7 liegt.

3. Schweißextruder nach Anspruch 1 oder 2, dadurch gekennzeichnet, daS die zwischen dem Boden der Führungsrille (10) und der Schnittkante der Schnecke (5) im Einzugsbereich (I) gemessene Rillentiefe 25 bis 70% der Dicke des Schweißdrahtes beträgt.

4. Schweißextruder nach einem der Ansprüche 1 bis 3, dadurch gekennzeichnet, daß die Schnecke (2) im Zwischenbereich (II) die größte Gangtiefe hat.

5. Schweißextruder nach einem der Ansprüche 1 bis 4, dadurch gekennzeichnet, daß die Schnecke (6) im Zwischenbereich (II) als zweigängiges System ausgebildet ist, von dem der eine Schneckengang auf den Zwischenbereich begrenzt ist und der andere Schneckengang in die Schnecke des Kompressionsbereiches (III) übergeht.

6. Schweißextruder nach einem der Ansprüche 1 bis 5, dadurch gekennzeichnet, daß der Zylinder (1) in dem Zwischenbereich (II) mit einem Kühlmantel (12) versehen ist.

7. Schweißextruder nach Anspruch 6, dadurch gekennzeichnet, daß der Kühlmantel (12) einerseits an die Druckseite eines Luftgebläses und andererseits an einen Lufterhitzer angeschlossen ist.

8. Schweißextruder nach einem der Ansprüche 1 bis 3, dadurch gekennzeichnet, daß die Schnecke (2) im Einzugsbereich (I) konisch ausgebildet ist und die Führungsrille (10) zur Schneckenachse (9) entsprechend geneigt ist.

9. Schweißextruder nach Anspruch 8, dadurch gekennzeichnet, daß der Zylinder (1) bzw. die Buchse (7) im Einzugsbereich (I) konisch ausgebildet ist.

10. Schweißextruder zur Bildung eines plastifizierten Kunststoffstranges nach einem der Ansprüche 1 bis 9, mit
einem Zylindergehäuse (1), das eine Extruderschnecke (2) enthält und im Bereich des Plastifizierteils der Schnecke (2) mit einem Heizmantel (20) versehen ist,
einem in dem Innenraum (21) des Zylindergehäuses (1) abströmseitig der Extruderschnecke (2) angeordneten Temperaturfühler (22), der mit einem Regler für die Leistung des Heizmantels (20) zusammengeschaltet ist, und
einem Lufterhitzer (15), der mit einer neben der Extruderdüse (17) angeordneten Heißluftdüse (23) strömungsmäßig verbunden ist,
dadurch gekennzeichnet, daß der Temperaturfühler (22) mit dem Regler (24) und dem Lufterhitzer (15) zu einem Regelkreis zusammengeschaltet ist und
der Heizmantel (20) wenigstens einen mehrere oder stetige Richtungsänderungen aufweisenden Heißluftkanal (25) enthält, dessen Eingang an den Lufterhitzer (15) angeschlossen ist und dessen Ausgang die Heißluftdüse (23) bildet.

11. Schweißextruder nach Anspruch 10, dadurch gekennzeichnet, daß sich der Eingang des Heißluftkanals (25) am hinteren Ende des Heizmantels (20) befindet und der Ausgang als Schlitzdüse (23) ausgebildet ist.

12. Schweißextruder nach Anspruch 10 oder 11, dadurch gekennzeichnet, daß der Heißluftkanal (25) parallel zur Zylinderachse verläuft, verzweigt ist und 180°-Umlenkungen aufweist.

13. Schweißextruder nach einem der Ansprüche 10 bis 12, dadurch gekennzeichnet, daß in der Schaltung des Schneckenantriebs ein Schutzschalter angeordnet ist, der den Schneckenantrieb erst freischaltet, wenn die Ist-Temperatur der plastifizierten Kunststoffmasse einen vorgegebenen, von dem Kunststoff abhängigen Wert überschreitet.

14. Verfahren zur Regelung der Temperatur einer Kunststoffmasse, die in dem Schweißextruder nach einem der Ansprüche 10 bis 13 durch die einer Heizung des Zylindergehäuses zugeführte Wärme plastifiziert wird, wobei die Ist-Temperatur in der plastifizierten Kunststoffmasse gemessen wird und zur Regelung der Heizleistung dient und die Ränder der zu verschweißenden Werkstücke durch Heißluft vorgewärmt werden, dadurch gekennzeichnet, daß man die gemessene Temperatur zur Regelung der Heißlufttemperatur benutzt und die Heißluft zur Beheizung des Zylindergehäuses und danach zur Vorwärmung der Werkstückränder dient.
